# FASCICULE DE BREVET EUROPEEN

(11) **EP 2 235 505 B1**
(45) Date de publication et mention de la délivrance du brevet: **19.06.2019**
(21) Numéro de dépôt: 09701290.0
(22) Date de dépôt: 09.01.2009
(51) Int. Cl.: G01N 21/64

(54) **PROCÉDÉ FLUORIMÉTRIQUE POUR ÉVALUER L'INFLUENCE D'UNE CONDITION SUR UN ÉCHANTILLON BIOLOGIQUE ET SES APPLICATIONS**
FLUOROMETRISCHES VERFAHREN ZUR BEURTEILUNG DES EINFLUSSES EINER BEDINGUNG AUF EINE BIOLOGISCHE PROBE UND SEINE ANWENDUNG
FLUOROMETRIC METHOD FOR EVALUATING THE INFLUENCE OF A CONDITION ON A BIOLOGICAL SAMPLE, AND APPLICATIONS THEREOF

(30) Priorité: 10.01.2008 FR 0850136
(43) Date de publication de la demande: 06.10.2010
(73) Titulaire: BREVELUX, SC, 82000 Montauban (FR)
(72) Inventeur: DERICK, Sylvain, F-31120 Portet sur Garonne (FR); FURGER, Christophe, F-31000 Toulouse (FR); TOCANNE, Jean-François, F-31130 Flourens (FR)
(74) Mandataire: Ilgart, Jean-Christophe
(86) Numéro de dépôt international: PCT/EP2009/050235
(87) Numéro de publication internationale: WO 2009/087229

(56) Documents cités:
- US-A1- 2005 048 539
- VAN MUNSTER E B ET AL: "Fluorescence resonance energy transfer (FRET) measurement by gradual acceptor photobleaching" JOURNAL OF MICROSCOPY BLACKWELL SCIENCE UK, vol. 218, juin 2005 (2005-06), pages 253-262, XP002494456 ISSN: 0022-2720
- XU X ET AL: "Detection of programmed cell death using fluorescence energy transfer." NUCLEIC ACIDS RESEARCH 15 APR 1998, vol. 26, no. 8, 15 avril 1998 (1998-04-15), pages 2034-2035, XP002494457 ISSN: 0305-1048
- SCHULTZ CARSTEN ET AL: "Multiparameter imaging for the analysis of intracellular signaling." CHEMBIOCHEM : A EUROPEAN JOURNAL OF CHEMICAL BIOLOGY AUG 2005, vol. 6, no. 8, août 2005 (2005-08), pages 1323-1330, XP002494458 ISSN: 1439-4227

## Description

### DOMAINE TECHNIQUE

La présente invention appartient au domaine technique des dosages fluorimétriques appliqués à la biologie et, plus particulièrement, à la biologie cellulaire.

La présente invention concerne un procédé fluorimétrique pour évaluer l'influence d'une condition expérimentale et/ou environnementale sur un échantillon biologique et propose des applications dans le domaine du diagnostic *in vitro*, dans le domaine du criblage de composés présentant un potentiel élevé d'un point de vue thérapeutique et dans le domaine du contrôle qualité.

### ÉTAT DE LA TECHNIQUE ANTÉRIEURE

La détection de la mort cellulaire fait l'objet de nombreuses applications notamment dans les domaines de la cancérologie et de la toxicologie. La mesure de la mort cellulaire est généralement basée sur l'observation et l'analyse d'évènements majeurs intervenant dans les ultimes étapes de la vie de la cellule en particulier les modifications dans le fonctionnement de la mitochondrie, dans l'organisation et la perméabilité de la membrane plasmique, ou encore de la structure de l'ADN.

Différentes technologies ont été développées qui visent en général la détection de l'une de ces étapes majeures. La détection de la modification de l'organisation de la membrane plasmique est traitée par exemple par la méthode « annexine » qui exploite la capacité de l'annexine de se lier à des phosphatidyl sérines qui se présentent sur la surface externe de la membrane plasmique à l'approche de la mort cellulaire (« Annexin V affinity assay : a review on an apoptosis detection system based on phosphatidylserine exposure », Van Engelans et al, Cytometry, 31 :1-9, 1998).

D'autres méthodes ciblent les remaniements et fragmentations de l'ADN en cours de mort cellulaire et utilisent des marqueurs nucléaires comme les SYTO (demande de brevet US 2006/099638 A1 ; Bradford et al, brevet US 2006/263844 A1) dont la fluorescence est décrite pour varier selon l'état des acides nucléiques (ADN et ARN) de la cellule (« Discrimination of DNA and RNA in cells by a vital fluorescent probe : lifetime imaging of SYTO13 in healthy and apoptotic cells », Van Zandvoort et al, Cytometry, 47 :226-235, 2002). Les méthodes ci-dessus nécessitent des instrumentations de type cytométrie de flux qui restent très chères, peu maniables et qui ne permettent de traiter que des échantillons sous forme de suspensions cellulaires.

La demande de brevet US 2005/048539 A1 décrit une méthode d'évaluation de la distance entre deux molécules comprenant l'obtention d'un échantillon biologique comprenant une première molécule marquée avec un fluorophore donneur et une deuxième molécule marquée avec un fluorophore accepteur, exposer l'échantillon biologique à une source d'excitation à impulsions, mesurer la durée de vie de fluorescence du fluorophore donneur, calculer la distance entre les fluorophores donneur et accepteur en tant que mesure de la distance entre les première et seconde molécules, la durée de la durée de vie de fluorescence étant en corrélation avec la distance entre les première et seconde molécules.

Il existe donc un réel besoin d'avoir des méthodes plus faciles à mettre en oeuvre et ce pour détecter des conditions apoptogènes et/ou identifier des composés capables de moduler l'apoptose. Ce besoin est réel dans le cadre des criblages à haut débit effectués par les industriels pharmaceutiques qui nécessitent la mise en oeuvre de tests simples et robustes. L'apport de telles méthodes *in vitro* permet finalement de limiter les essais sur des animaux, couteux et non compatibles avec le criblage à haut débit.

### EXPOSÉ DE L'INVENTION

La présente invention permet d'apporter une solution aux problèmes techniques ci-dessus puisqu'elle décrit un nouveau procédé fluorimétrique permettant de caractériser l'influence d'une condition environnementale et/ou expérimentale sur un échantillon biologique en se basant sur le profil cinétique de la fluorescence émise par un composé fluorescent mis en contact avec ledit échantillon biologique soumis à ladite condition environnementale et/ou expérimentale.

La présente invention est basée sur les travaux des inventeurs qui ont permis de mettre au point une méthode d'analyse de la mort cellulaire. Elle exploite la capacité de fluorophores se liant à l'ADN de voir leurs propriétés de fluorescence perturbées par cette liaison.

Sans vouloir être tenu par une quelconque théorie, il apparaît que les fluorophores liés à l'ADN se localisent dans un espace confiné qui, pour un taux de marquage suffisant, favorise un mécanisme extensif de transfert d'énergie par résonance entre mêmes molécules conduisant à une inhibition partielle de leur émission de fluorescence (on parle de homo-transfert ou homo-FRET).

Sous illumination en continu de l'échantillon, des fluorophores sont photodétruits (« photobleaching ») ce qui entraîne une levée progressive du processus d'homoFRET et donc une restauration des propriétés d'émission de fluorescence des fluorophores encore intacts. Ces derniers peuvent alors être considérés comme « photoactivés ». Cette « photoactivation » permet donc de mesurer en cinétique le niveau de restauration de la fluorescence émise par l'échantillon. La capacité de « photoactivation » de fluorophores se liant à l'ADN est intimement liée à la distance existant entre les différentes molécules présentes sur la molécule d'ADN. Un exemple de telles molécules a été récemment décrit (« BENA435, a new cell-permeant photoactivated green fluorescent DNA probe », Erve et al, Nucleic Acids Research, vol. 34, no. 5, 2006).

Par ailleurs, l'état de l'ADN est connu pour être modifié dans de nombreuses situations physiologiques, notamment la mort cellulaire (« Degradation of chromosomal DNA during apoptosis », Nagata et al, Cell Death and Differentiation, 10 :108-116, 2003). L'invention part de l'idée que le niveau de restauration de fluorescence décrit plus haut va varier selon l'état de l'ADN (normal, condensé, dégradé, fractionné,...), les différents états induisant des distances entre fluorophores variables, donc un état d'inhibition de fluorescence différent. Il en résulte alors un niveau de restauration variable de la fluorescence qui est associé à l'état de l'ADN.

Le procédé de l'invention présente trois intérêts majeurs qui le différencient des méthodes antérieures :
- il fonctionne sur des cellules en culture adhérentes ou en suspension,
- le résultat est quantifiable (établissement de relations dose-réponse),
- le protocole expérimental mis en oeuvre est extrêmement simple (ajout de la molécule dans le milieu de culture et mesure sur des lecteurs de fluorescence classiques et bon marché).

De plus, la présente invention est remarquable car, à partir de résultats obtenus sur des études liées à l'apoptose, elle est généralisable à de nombreux processus physiologiques dans lesquels on peut tirer partie de l'évolution du profil cinétique de fluorescence d'un échantillon fluorescent maintenu sous illumination, les différents profils cinétiques obtenus à partir de différentes conditions expérimentales traduisant différents états de l'échantillon. Les processus physiologiques susceptibles d'être étudiés par le procédé de l'invention doivent présenter deux états extrêmes ci-après désignés état 1 et état 2.

Dans un état 1, les biocapteurs situés à une distance compatible avec le phénomène d'homo-FRET (FRET entre molécules identiques) émettent peu de fluorescence observable lorsqu'ils sont excités (phénomène d'inhibition de fluorescence). Cette inhibition de fluorescence est alors levée sous illumination continue de l'échantillon, ce qui aboutit à une augmentation de la fluorescence observée. L'augmentation de fluorescence occasionnée par l'illumination pourrait résulter d'un phénomène de photodégradation d'un nombre progessif de molécules de biocapteurs. Cette photodégradation occasionnerait une augmentation de la distance entre molécules non dégradées, distance qui devient progressivement incompatible avec le phénomène d'inhibition de fluorescence. Cette levée progressive de l'inhibition de fluorescence se manifeste alors par une augmentation de la fluorescence observée.

Dans un état 2, les biocapteurs situés à une distance incompatible avec le phénomène d'homo-FRET ne sont pas soumis à l'inhibition de fluorescence décrite ci-dessus. L'illumination ne permet pas d'observer d'augmentation de la fluorescence.

Ainsi, parmi les processus physiologiques pouvant avantageusement être étudiés via le procédé de l'invention, on peut citer les processus physiologiques impliquant :
- des variations dans l'état de la structure de l'ADN telles qu'une réorganisation, une dégradation ou une segmentation comme l'apoptose, la nécrose ou les divisions cellulaires,
- des variations dans la localisation et/ou la concentration cellulaires de composés tels que des protéines ou des acides nucléiques comme des ARNm caractéristiques, comme l'interaction entre protéines identiques ou différentes.

La présente invention concerne donc un procédé pour déterminer l'influence d'une condition sur un échantillon biologique d'après la revendication 1 et d'après la revendication 2.

Il est à noter que le procédé selon l'invention envisage deux alternatives de mise en oeuvre avec, dans un cas, l'échantillon biologique qui est soumis à la condition, alors que le composé fluorescent est déjà fixé sur l'échantillon et, dans l'autre cas, l'échantillon qui est soumis à la condition, avant que le composé fluorescent ne soit fixé sur l'échantillon.

Le procédé de la présente invention se distingue de l'art antérieur notamment de par le fait, d'une part, qu'il ne nécessite pas l'utilisation d'un membre donneur de fluorescence et d'un membre accepteur de fluorescence différent comme dans les couples de partenaires de FRET et, d'autre part, que l'excitation du composé fluorescent à la longueur d'onde d'excitation dudit composé est longue (plusieurs secondes). Ainsi, le procédé de la présente invention ne met en oeuvre avantageusement qu'un seul type de composé fluorescent. Plusieurs molécules d'un même composé fluorescent sont utilisables dans le procédé selon l'invention et non plusieurs molécules d'au moins deux composés fluorescents différents comme dans la technique de FRET.

Avantageusement, l'échantillon biologique mis en oeuvre dans le cadre de la présente invention est choisi dans le groupe constitué par une cellule, plusieurs cellules, une partie de cellule, une préparation cellulaire et leurs mélanges.

Dans le cadre de la présente invention, on entend par « cellule », aussi bien une cellule de type procaryote que de type eucaryote. Parmi les cellules eucaryotes, la cellule peut être une levure telle qu'une levure du genre *Saccharomyces* ou *Candida*, une cellule de mammifères, une cellule végétale ou une cellule d'insectes. Les cellules de mammifères peuvent notamment être des cellules tumorales, des cellules de lignée somatique normale ou des cellules souches. Il peut s'agir de manière non exclusive de globules rouges, d'ostéoblastes, de cellules neuronales, d'hépatocytes, de cellules musculaires, des lymphocytes ou de cellules progénitrices. Les cellules de type procaryote sont des bactéries qui peuvent être des gram + ou -. Parmi ces bactéries, on peut citer, à titre d'exemples et de façon non-exhaustive, les bactéries appartenant aux embranchements des spirochètes et des chlamydiae, les bactéries appartenant aux familles des entérobactéries (telles que *Escherichia coli*), des streptococcacées (telles que streptococcus), des microccacées (telles que staphylococcus), des légionelles, des mycobactéries, des bacillacées et autres.

Les cellules mises en oeuvre dans le cadre de la présente invention peuvent être obtenues à partir d'une culture cellulaire primaire ou d'une culture d'une lignée cellulaire ou à partir d'un échantillon d'un fluide tel que de l'eau ou un fluide biologique préalablement extrait d'un corps humain ou animal, ledit échantillon pouvant avoir subi différents traitements préalables comme une centrifugation, une concentration, une dilution ....

Par « partie de cellule », on entend dans le cadre de la présente invention notamment l'intégralité ou une portion de la membrane cellulaire. Par « membrane cellulaire », on entend dans le cadre de la présente invention aussi bien la membrane plasmique riche en phospholipides des cellules eucaryotes (également appelée membrane cytoplasmique, plasmalemme ou membrane plasmatique) que la membrane plasmique et la paroi cellulaire glucidique (contenant du peptidoglycane) des bactéries ou des cellules de plantes.

Par « préparation cellulaire », on entend dans le cadre de la présente invention aussi bien un extrait cellulaire qu'une préparation enrichie en organites cellulaires tels que des noyaux, des mitochondries, l'appareil de Golgi, des endosomes ou des lysosomes. Parmi les extraits cellulaires préférés, on peut citer les acides nucléiques et notamment l'ADN cellulaires.

Les parties de cellules et préparations cellulaires mises en oeuvre dans le cadre de la présente invention peuvent être obtenues à partir de cellules issues d'une culture cellulaire ou d'un échantillon d'un fluide tels que précédemment définis. L'homme du métier connaît différentes techniques permettant d'obtenir, à partir de cellules ou de cultures cellulaires, des membranes cellulaires, des parties de membranes cellulaires, des fractions riches en membranes cellulaires, des extraits et préparations cellulaires impliquant des techniques telles que la technique de partage de phase ou des étapes telles que des étapes de centrifugation.

Par « composé fluorescent », on entend, dans le cadre de la présente invention un composé qui, lorsque il est excité à une longueur d'onde caractéristique appelée longueur d'onde d'excitation, absorbe un photon dans cette gamme d'excitation et retourne à son état fondamental en restituant un photon émis à une longueur d'onde également caractéristique appelée longueur d'onde d'émission.

N'importe quel composé fluorescent connu par l'homme du métier est utilisable dans le cadre de la présente invention. Avantageusement, le composé fluorescent mis en oeuvre dans le cadre de la présente invention présente un recouvrement spectral favorable entre les spectres d'excitation et d'émission. On peut citer, à titre d'exemples non limitatifs, de composés fluorescents susceptibles d'être utilisés dans la présente invention des colorants tels que l'Alexa Fluor® 350, l'Alexa Fluor® 488, l'Alexa Fluor® 532, l'Alexa Fluor® 633, l'Alexa Fluor® 647, l'Alexa Fluor® 660, l'Alexa Fluor® 680, l'allophycocyanine, raminométhylcoumarine acetic acid, le Cy2®, le Cy 5.1®, le Cy 5®, le Cy 5.5®, le dichlorofluorescéine (DCFH), le dihydrorhodamine (DHR), la eGFP (pour « enhanced GFP »), le Fluo-3, le FluorX®, la fluorescéine, la 5-maleimide fluorescéine, l'isothiocyanate de fluorescéine (FITC), le PerCP, la r-Phycoérythrine (PE), le tandem r-Phycoérythrine-Cyanine 5 ou SpectralRed® ou CyChrome®, la r-Phycoérythrine-Cyanine 5.5 (PE-CY 5.5®), la r-Phycoérythrine- Cyanine 7 (PE-CY 7®), la r-Phycoérythrine-Texas Red-x®, le Red 613®, la Rhodamine 110, la Rhodamine 123, le S65L, le S65T, l'isothiocyanate de tétraméthylerhodamine, le Texas-Red-x®, le TruRed®, l'indo 1, les nano cristaux (Quantum Dots), le Fura 2, le Fura 3, le quin et le DS Red.

Dans une variante préférée de l'invention, le composé fluorescent mis en oeuvre est un composé fluorescent spécifique des acides nucléiques. Par « acide nucléique », on entend un acide désoxyribonucléique (ADN) simple brin ou double brin, un acide ribonucléique (ARN) tel qu'un ARN messager ou un ARN ribosomique.

Les composés fluorescents spécifiques des acides nucléiques sont, notamment, choisis parmi les intercalants fluorescents, les colorants liant les bases A:T ou les bases G:C et les cyanines perméantes ou imperméantes. Plus particulièrement, lesdits composés fluorescents sont choisis dans le groupe constitué par le bromure d'éthidium, le thiazole orange, le thiazole blue et leurs dérivés, la thioflavine S, la thioflavine T, la thioflavine TCN®, le diéthyl-quinolythocyanine iodide (DEQTC), le TOTOl®, le TO-PRO-1®, ou encore le YOYO-1®, l'Hoechst® 33258, l'Hoechst® 33342, l'Hoechst® 34580, le diamidino phénylindole (DAPI), l'iodure de propidium, la pyronine Y, la 7-aminoactinomycine D (7 AAD), l'acridine orange, rauramine O, la calcéine, le New Méthylène Blue, l'olamin-O, l'Oxazine 750, le bleu astra, le SYTOX® Green, la série des SYTO® comprenant notamment le SYTO 11®, le SYTO 12®, le SYTO 13®, le SYTO 15®, le SYTO 16®, le SYTO 18®, le SYTO 62®, le SYTO 80® ou le SYTO 81®.

Dans le cadre de la présente invention, la fixation du composé fluorescent audit échantillon biologique peut être directe. Cet aspect de l'invention est notamment celui décrit dans la partie expérimentale ci-après avec les composés fluorescents de la série des SYTO® se fixant directement à l'ADN contenu dans l'échantillon biologique.

Dans une variante de la présente invention, la fixation du composé fluorescent audit échantillon biologique peut être indirecte. Dans cette variante, le composé fluorescent ne se fixe audit échantillon biologique que par l'intermédiaire d'un agent de fixation. Par « agent de fixation », on entend, dans le cadre de la présente invention, un composé capable de se fixer audit échantillon biologique et auquel est fixé, de façon directe ou indirecte, le composé fluorescent. Avantageusement, l'agent de fixation est choisi dans le groupe constitué par un peptide, une protéine, un anticorps, un agoniste ou antagoniste de récepteurs membranaires ou nucléaires, une hormone, un acide nucléique, etc... La fixation du composé fluorescent peut être fixé de façon directe audit agent de fixation et notamment par l'intermédiaire d'une liaison covalente. En variante, cette fixation peut être indirecte via un bras de liaison susceptible de lier le composé fluorescent audit agent de liaison. L'homme du métier connaît différents types d'agents de liaison et saura, en fonction du composé fluorescent et de l'agent de liaison mis en oeuvre, choisir l'agent de liaison le mieux approprié. De même, l'homme du métier connaît différentes techniques permettant de préparer des agents de liaison portant, de façon directe ou indirecte, un composé fluorescent. Ces techniques appartiennent notamment au domaine du génie génétique et à celui de la synthèse chimique.

Par « condition », on entend dans le cadre de la présente invention aussi bien une condition environnementale ou expérimentale, physique ou chimique, capable d'engendrer des modifications dans l'échantillon biologique et, en particulier, des modifications physiologiques au sein de cet échantillon biologique. Avantageusement, la condition dont on cherche à déterminer l'influence sur un échantillon biologique est une condition physique ou chimique.

Par « condition physique », on entend une condition physique qui modifie l'environnement dans lequel se trouve l'échantillon biologique telle qu'une condition thermique (modification de la température dudit environnement), une condition électrique (environnement et donc échantillon biologique soumis à une stimulation électrique) ou une condition mécanique.

Par « condition chimique » on entend une condition chimique qui modifie l'environnement dans lequel se trouve l'échantillon biologique telle que l'adjonction d'un composé à tester ou d'un échantillon E tel que ultérieurement défini dans l'environnement et/ou la modification de sa concentration, la modification de la nature et/ou de la concentration des ions contenus dans ledit environnement.

La présente invention concerne un procédé pour déterminer l'influence d'une condition sur un échantillon biologique comprenant les étapes consistant à :
a) soumettre ledit échantillon biologique à ladite condition ;
b) mettre un composé fluorescent en contact avec ledit échantillon, l'ordre des étapes (a) et (b) étant quelconque ;
c) exciter ledit composé fluorescent à la longueur d'onde d'excitation adéquate pendant une durée t dont le point de départ est *t0*,
d) établir le profil cinétique de la fluorescence émise par ledit composé fluorescent fixé audit échantillon durant la durée *t* d'excitation, la fluorescence mesurée à *t0* servant de valeur de référence, ledit procédé mettant en oeuvre un seul type de composé fluorescent.

Les étapes (a) et (b) du procédé selon l'invention sont des étapes de routine pour l'homme du métier qui saura les mettre en oeuvre de façon adéquate en tenant compte du type d'échantillon biologique, du type de condition et du type de composé fluorescent utilisés.

A cet effet, le procédé de la présente invention peut nécessiter une étape supplémentaire de perméabilisation. Cette étape supplémentaire peut être obligatoire lorsque le composé fluorescent ne peut, de pas sa nature, aller se fixer sur ledit échantillon biologique en l'absence de toute perméabilisation. Toute technique de perméabilisation connue de l'homme du métier est utilisable dans le cadre de la présente invention. Avantageusement, cette étape de perméabilisation peut nécessiter l'emploi de détergents tels que du Triton X100.

Le procédé de la présente invention peut nécessiter une étape supplémentaire de fixation de l'échantillon biologique. Toute technique de fixation d'échantillon biologique et notamment de cellules connue de l'homme du métier est utilisable dans le cadre de la présente invention comme une fixation dans de l'éthanol à 70 %.

La longueur d'onde d'excitation adéquate utilisée à l'étape (c) du procédé selon l'invention correspond à la longueur d'onde d'excitation caractéristique telle que précédemment définie du composé fluorescent mis en oeuvre à l'étape (b) du procédé. L'homme du métier connaît la valeur de cette longueur d'onde ou peut facilement l'obtenir sans aucun effort inventif.

La durée *t* pendant laquelle on excite ledit composé fluorescent à la longueur d'onde d'excitation adéquate est une durée longue. Avantageusement, cette durée *t* est comprise entre 1 et 1000 secondes, notamment entre 10 et 800 secondes, en particulier, entre 20 et 500 secondes, plus particulièrement, entre 30 et 200 secondes et, tout particulièrement, entre 40 et 100 secondes. Cette excitation continue peut être générée par plusieurs flashes d'excitation successifs.

L'étape (d) du procédé consiste à établir le profil cinétique de la fluorescence émise par ledit composé fluorescent durant la durée *t* d'excitation dont le point de départ est *t0*. Cette étape (d) consiste, plus particulièrement, à mesurer la fluorescence émise par le composé fluorescent à différents temps durant la durée *t* d'excitation. Ces différents temps peuvent être choisis à intervalles réguliers ou à intervalles irréguliers. Avantageusement, les mesures sont effectuées à des intervalles réguliers compris entre 0,1 et 10 secondes et notamment entre 1 et 5 secondes et, en particulier, de 2 secondes. Les valeurs de fluorescence émise mesurées sont alors exprimées par rapport à la valeur obtenue à *t0*, cette dernière servant donc de valeur de référence. Il convient de remarquer que le fait d'exprimer les valeurs mesurées par rapport à la valeur initiale obtenue à *t0* permet de s'affranchir de problèmes liés à la nature de l'échantillon biologique mis en oeuvre. A titre d'exemple, on peut citer, notamment dans le cas où l'échantillon biologique est une culture cellulaire adhérente ou en suspension, les problèmes liés au nombre de cellules contenues dans ledit échantillon. En effet, avec le mode de calcul précédemment décrit, le profil cinétique mesuré pour un échantillon sera rigoureusement identique quel que soit le nombre de cellules présentes dans l'échantillon. Il sera ainsi possible de comparer des résultats obtenus sur des échantillons de taille (de nombre de cellules) variable.

Tout instrument connu de l'homme du métier dans le domaine de la fluorescence est utilisable lors de l'excitation de l'étape (c) et lors de la mesure de la fluorescence émise de l'étape (d). A titre d'exemples non limitatifs, on peut citer un microscope à fluorescence équipé d'une lampe à mercure ou un microscope à fluorescence équipé d'une lampe Xenon flash.

Le profil cinétique obtenu permet donc d'apprécier l'influence sur un échantillon biologique de la condition à laquelle ce dernier est soumis. En effet, lorsque le profil cinétique obtenu présente des valeurs supérieures à la valeur de référence du temps *t0*, on peut en conclure que l'échantillon biologique se trouve dans un état qui permet ou qui n'affecte pas ou peu le phénomène d'homo-FRET pour le composé fluorescent mis en oeuvre. A titre d'exemple et dans le cas d'un composé fluorescent se fixant sur l'ADN double-brin, un tel profil permet de conclure que la condition permet, à l'ADN contenu dans l'échantillon biologique, de conserver ou de prendre une structure compactée.

Au contraire, lorsque le profil cinétique présente des valeurs inférieures à la valeur de référence du temps *t0*, on peut en conclure que l'échantillon biologique se trouve dans un état dans lequel aucun homo-FRET n'est possible. A titre d'exemple et dans le cas d'un composé fluorescent se fixant sur l'ADN double-brin, un tel profil permet de conclure que la condition a induit une dégradation, une réorganisation et/ou une segmentation de l'ADN contenu dans l'échantillon biologique.

Ainsi, le procédé de l'invention peut permettre de distinguer deux états cellulaires correspondant à deux états dans la structure de l'ADN. Par exemple, l'invention peut être appliquée au traitement avec un inducteur de l'apoptose, évènement connu pour modifier la structure de l'ADN (réorganisation, dégradation et segmentation). L'état 1 correspond alors à des cellules non traitées ou non sensibles à l'inducteur. On observe alors une augmentation de la fluorescence observée sous illumination. L'état 2 correspond notamment à des cellules apoptotiques (ADN dégradé). On n'observe pas d'augmentation de fluorescence sous illumination.

Il peut toutefois être nécessaire de comparer le profil cinétique obtenu à l'étape (d) avec un profil cinétique de référence dans lequel l'état de l'échantillon biologique est parfaitement défini. Ainsi, le procédé de l'invention peut comprendre une étape (e) supplémentaire et facultative consistant à comparer le profil cinétique obtenu à l'étape (d) avec un profil cinétique de référence.

A titre d'exemple et dans le cas d'un composé fluorescent se fixant sur l'ADN double-brin, un profil cinétique de référence pourra être :
- soit le profil cinétique obtenu lorsque l'échantillon biologique est mis en présence d'un composé tel qu'un agent apoptogène ou un agent anti-cancéreux dans des conditions telles que la majorité voire la totalité de l'ADN contenu dans l'échantillon a été dégradé, réorganisé et/ou segmenté,
- soit le profil cinétique obtenu lorsque l'échantillon biologique ne subit aucun traitement ou stimulation pouvant entraîner une quelconque dégradation, réorganisation ou segmentation de l'ADN.

Cette étape (e) de comparaison de différents profils cinétiques peut être nécessaire lorsque la condition à laquelle l'échantillon biologique est soumis entraîne un état intermédiaire entre les états 1 et 2 tels que précédemment définis.

Il convient de remarquer que, dans le cadre de la comparaison d'échantillons biologiques identiques soumis à au moins une condition différente, il n'est pas obligatoire d'avoir une mesure de la fluorescence émise par le composé fluorescent à différents temps durant la durée *t* d'excitation, et que la mesure à un seul temps donné suffit.

Dans cette forme de mise en oeuvre particulière de l'invention, la présente invention concerne un procédé pour déterminer l'influence d'une condition sur un échantillon biologique comprenant les étapes consistant à :
a') diviser ledit échantillon biologique en une première partie A et une seconde partie B ;
b') soumettre ladite partie A à ladite condition ;
c') mettre ledit composé fluorescent en contact avec les parties A et B dudit échantillon biologique, l'ordre des étapes (b') et (c') étant quelconque ;
d') exciter ledit composé fluorescent à la longueur d'onde d'excitation adéquate pendant une durée t dont le point de départ est *t0*,
e') mesurer, pour chaque partie d'échantillon, la fluorescence émise par ledit composé fluorescent fixé à ladite partie d'échantillon à un temps T inclus dans la durée *t* d'excitation, la fluorescence mesurée à *t0* pour la partie A et la partie B servant de valeur de référence pour les fluorescences mesurées respectivement pour la partie A et la partie B,
f') comparer les valeurs obtenues à l'étape (e') pour la partie A et la partie B dudit échantillon biologique, ledit procédé mettant en oeuvre un seul type de composé fluorescent.

Tout ce qui a précédemment été décrit pour le procédé selon l'invention et notamment pour les étapes (a) à (e) du procédé selon l'invention s'applique *mutatis mutandis* aux étapes (a') à (f') de cette variante.

Le temps T auquel la mesure de la fluorescence est effectuée peut être n'importe quel temps inclus dans la durée *t* d'excitation à l'exception du temps *t0*. Avantageusement, ledit temps T est supérieur à (*t0* + 0,5 secondes), notamment supérieur à (*t0* + 10 secondes) et, en particulier, supérieur à (*t0* + 15 secondes). D'autres mesures de la fluorescence émise peuvent être effectuées à d'autres temps T₁, T₂, etc...

La comparaison lors de l'étape (f') peut être effectuée en soustrayant la valeur obtenue à l'instant T pour la partie B de l'échantillon (i.e. la partie de l'échantillon servant de contrôle) à la valeur obtenue à l'instant T pour la partie A de l'échantillon (i.e. la partie de l'échantillon ayant été soumis à la condition). Si la valeur obtenue après ladite soustraction est négative, il pourra être conclu que la condition à laquelle l'échantillon a été soumis a induit une diminution voire une disparition du phénomène d'homo-FRET qui existait dans la partie B de l'échantillon.

La présente invention comprend de nombreuses applications notamment dans le cadre du criblage de composés à intérêt pharmaceutique. Par conséquent, un mode de réalisation de la présente invention concerne également un procédé pour identifier un composé capable de moduler un processus biologique comprenant une étape de mise en oeuvre d'un procédé tel que précédemment défini, ledit composé à tester étant la condition à laquelle l'échantillon biologique est soumis.

Par « composé capable de moduler un processus biologique », on entend, dans le cadre de la présente invention, un agent capable d'inhiber, d'activer, d'accélérer ou de ralentir ledit processus biologique. A titre d'exemples non limitatifs de processus biologiques qui peuvent être étudiés dans le cadre de la présente invention, on peut citer l'apoptose, la nécrose, le réarrangement protéique membranaire et la division cellulaire.

Le terme « composé » tel qu'utilisé dans la présente invention fait référence à une molécule de n'importe quel type comprenant un composé chimique ou un mélange de composés chimiques, une séquence peptidique, une séquence nucléotidique comme une séquence antisens, une macromolécule biologique ou un extrait d'un matériel biologique issu d'algues, de bactéries, de cellules ou de tissus d'animaux en particulier de mammifères, de plantes ou de champignons. Ledit composé peut donc être un composé naturel ou un composé synthétique notamment obtenu par chimie combinatoire.

La présente invention trouve également une application dans le contrôle qualité. En effet, cette dernière peut être mise en oeuvre afin de détecter la présence d'un composé capable de moduler un processus biologique dans un échantillon E. Ainsi, un mode de réalisation de la présente invention concerne également un procédé pour détecter la présence d'un composé capable de moduler un processus biologique dans un échantillon E comprenant une étape de mise en oeuvre d'un procédé tel que précédemment défini, ledit échantillon E étant la condition à laquelle l'échantillon biologique est soumis.

Dans cette application, le composé susceptible d'être présent dans l'échantillon est tel que précédemment défini. Il peut s'agir d'une toxine ou d'un mélange de toxines. L'échantillon E peut être tout échantillon susceptible de subir un contrôle qualité et notamment une matière première naturelle ou synthétique, un produit naturel, un produit pharmaceutique, un produit manufacturé, un produit alimentaire, etc....

De plus, le profil de référence tel que précédemment décrit peut être obtenu à partir :
- d'un contrôle exempt de composé capable de moduler un processus biologique tel qu'un échantillon E contrôle ne comprenant aucun composé capable de moduler un processus biologique, ou
- d'un contrôle contenant une quantité connue d'un composé ou d'un mélange de composés capable (s) de moduler un processus biologique.

De même, la partie B de l'échantillon biologique telle que précédemment décrite peut éventuellement être soumise à un échantillon E contrôle ne comprenant aucun composé capable de moduler un processus biologique ou comprenant une quantité connue d'un composé ou d'un mélange de composés capable(s) de moduler un processus biologique.

Cette application dans le contrôle qualité trouve un intérêt particulier dans la détection d'au moins une toxine marine ou un mélange de toxines marines, ladite toxine marine ou ledit mélange étant le composé capable de moduler un processus biologique selon la présente invention. Par « toxine marine », on entend également une phycotoxine et notamment une toxine choisie parmi l'acide domoïque, l'acide okadaïque, les azaspiracides, les ciguatoxines, la gambiertoxine, la gymnodimine, les maïtotoxines, la palytoxine, les pectenotoxines, les spirolides et leurs mélanges. Dans ce cas, l'échantillon E mis en oeuvre peut être un extrait de mollusques tels que huîtres, moules, palourdes, coques, coquilles Saint-Jacques, pectinidés, ormeaux et leurs mélanges. Par « extrait de mollusques », on entend dans le cadre de la présente invention un extrait obtenu par broyage de mollusques entiers (i.e. avec coquille), un extrait obtenu par broyage du corps de mollusques ou un extrait obtenu par broyage de parties particulières du corps de mollusques telles que la partie digestive ou la fraction grasse de la partie digestive. Cet extrait peut éventuellement subir d'autres traitements, avant d'être mis au contact de l'échantillon biologique, tels qu'une centrifugation, une solubilisation, etc...

L'invention sera mieux comprise à la lecture des figures et exemples qui suivent. Ceux-ci n'ont pas pour but de limiter l'invention dans ses applications, il ne s'agit que d'illustrer ici les possibilités offertes par le procédé de l'invention.

### BRÈVE DESCRIPTION DES DESSINS

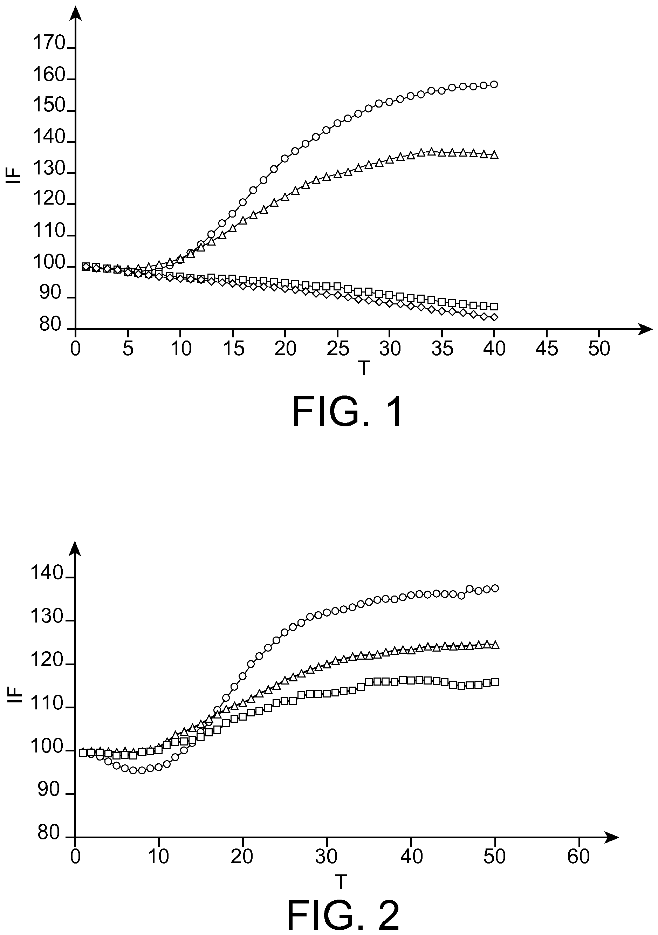

La figure 1 présente le profil cinétique de l'illumination de cellules eucaryotes traitées ou non par différentes quantités d'un agent apoptotique et en présence de SYTO62. Des cellules HeLa ont été traitées pendant 7 heures avec (Δ, □, ◊) ou sans (○) 0,1 µM (Δ), 0,5 µM (□) et 1 µM (◊) de staurosporine. Les cellules ont ensuite été marquées avec une solution de SYTO62 à 10 µM puis soumises à une illumination continue pendant 40 secondes. L'intensité de fluorescence est alors mesurée toutes les secondes. Chaque valeur d'intensité est alors exprimée en pourcentage de la première valeur de fluorescence mesurée. (IF : intensité de fluorescence ; T : temps d'illumination).
La figure 2 présente le profil cinétique de l'illumination de cellules eucaryotes traitées ou non par différentes quantités d'un agent anti-cancéreux et en présence de SYTO62. Des cellules HeLa ont été traitées pendant 24 heures avec (Δ, □) ou sans (○) 0,1 µM (Δ) et 1 µM (□) de Paclitaxel (Taxol). Les cellules ont ensuite été marquées avec une solution de SYTO62 à 10 µM puis soumises à une illumination continue pendant 50 secondes. L'intensité de fluorescence est alors mesurée toutes les secondes. Chaque valeur d'intensité est alors exprimée en pourcentage de la première valeur de fluorescence mesurée. (IF : intensité de fluorescence ; T : temps d'illumination).

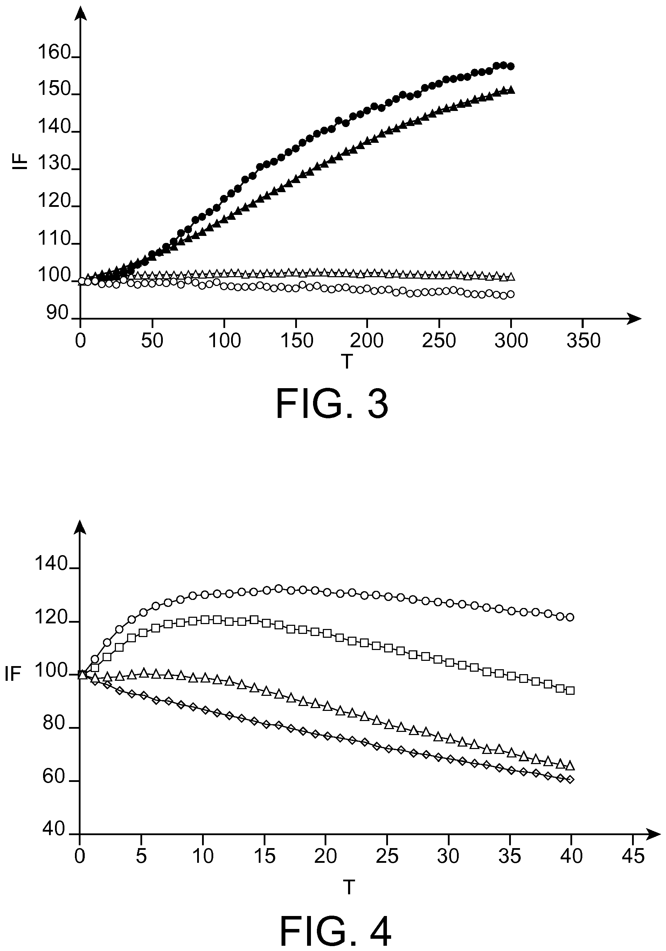

La figure 3 présente le profil cinétique de l'illumination de cellules eucaryotes traitées ou non par différentes quantités d'un agent apoptotique et en présence de SYTO13 ou de SYTO15. Des cellules HeLa ont été traitées pendant 7 heures avec (○,Δ) ou sans (●,▲) 1µM de staurosporine. Les cellules ont ensuite été marquées avec une solution de SYTO13 (Δ,▲) ou de SYTO15 (○,●) à 10 µM puis soumises à une illumination continue pendant 300 secondes. L'intensité de fluorescence est alors mesurée toutes les 5 secondes. Chaque valeur d'intensité est alors exprimée en pourcentage de la première valeur de fluorescence mesurée. (IF : intensité de fluorescence ; T : temps d'illumination).
La figure 4 présente le profil cinétique de l'illumination de cellules procaryotes en présence de différentes quantités de SYTO62. Des bactéries ont été marquées pendant 30 minutes avec une solution de SYTO62 à 6,25 µM (◊), 12,5 µM (Δ), 25 µM (□) ou 50 µM (○). Les bactéries sont ensuite soumises à une illumination continue pendant 40 secondes. L'intensité de fluorescence est alors mesurée toutes les 5 secondes. Chaque valeur d'intensité est alors exprimée en pourcentage de la première valeur de fluorescence mesurée. (IF : intensité de fluorescence ; T : temps d'illumination).

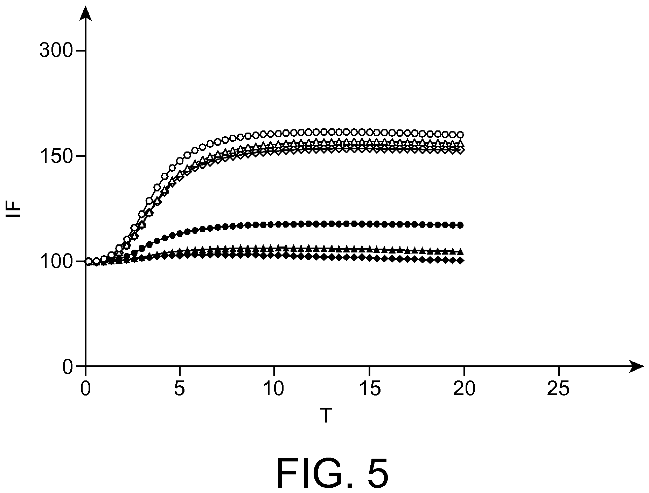

La figure 5 présente le profil cinétique de l'illumination de cellules HepG2 traitées pendant 24 heures avec 0,01 µM (Δ), 0,031 µM (◊), 0,1 µM (●), 0,31 µM (▲) et 1 µM (◆) d'acide okadaïque ou sans (○). Les cellules ont ensuite été marquées avec une solution de SYTO13 à 2 µM final puis soumises à une illumination continue pendant 20 secondes. L'intensité de fluorescence est alors mesurée toutes les 0,4 secondes. Chaque valeur d'intensité est alors exprimée en pourcentage de la première valeur de fluorescence mesurée. (IF : intensité de fluorescence ; T : temps d'illumination).

### EXPOSÉ DÉTAILLÉ DE MODES DE RÉALISATION PARTICULIERS

### Exemple 1 : Procédé selon l'invention mis en oeuvre sur des cellules eucaryotes avec différentes quantités d'un agent apoptotique.

Des cellules HeLa (Sigma-Aldrich) sont ensemencées dans une microplaque noire à fond transparent format 96 puits à 20000 cellules par puits la veille de l'expérience. Le jour du test les cellules sont traitées ou non avec 0,1 ; 0,5 et 1 µM de staurosporine (Sigma-Aldrich) pendant 7 heures. Les cellules sont alors marquées 20 minutes avec 50 µl d'une solution de SYTO62 (Invitrogen) à 10 µM préparée dans un tampon contenant 25 mM d'Hepes, 140 mM de NaCl, 1 mM EDTA, 0,1 % albumine sérique bovine (BSA), pH 7,4 (tampon A).

Les échantillons sont placés sous un microscope à fluorescence (Leica DMIRB) à un grossissement ×100 puis soumis à une illumination continue à 488 nm avec une lampe à mercure (HBO 103W/2) pendant 40 secondes. L'intensité de fluorescence émise par le biocapteur est alors mesurée toutes les secondes. Les résultats sont présentés à la figure 1.

Dans les conditions expérimentales décrites, les cellules HeLa non traitées avec l'agent apoptotique staurosporine présentent, sous illumination continue, une augmentation de l'intensité de fluorescence mesurée en fonction du temps d'illumination. Lorsque les cellules sont traitées avec 0.1µM de staurosporine, une dose permettant d'induire un niveau d'apoptose intermédiaire, on mesure une augmentation de fluorescence plus faible que dans la condition non traitée. Lorsque les cellules sont traitées avec 0,5 µM et 1 µM de staurosporine, doses permettant d'induire respectivement un niveau d'apoptose suboptimal et optimal, on ne mesure plus d'augmentation de fluorescence.

Dans le cas des cellules non traitées, la proximité entre molécules de marqueur permet d'établir un mécanisme d'homoFRET dû au niveau de compactage de l'ADN. Dans cette condition l'illumination permet de lever l'inhibition de fluorescence. Lorsque les cellules entrent en apoptose, à des degrés variant avec la concentration d'agent utilisé, l'intégrité de l'ADN est altérée se caractérisant par une augmentation de la distance entre molécules de SYTO62. Dans ces conditions l'inhibition de fluorecence est plus faible et l'amplitude de la variation de fluorescence sous illumination moins importante (0,1 µM). A des concentrations de 0,5 µm et 1 µM la distance entre molécules devient trop importante pour que s'établisse de l'homoFRET. Aucune levée d'inhibition ne peut donc être mesurée.

### Exemple 2 : Procédé selon l'invention mis en oeuvre sur des cellules eucaryotes avec différentes quantités d'un agent anti-cancéreux.

Des cellules HeLa (Sigma-Aldrich) sont ensemencées dans une microplaque noire à fond transparent format 96 puits à 20000 cellules par puits la veille de l'expérience. Le jour du test les cellules sont traitées ou non avec 0,1 et 1 µM de Paclitaxel ou « Taxol » (Sigma-Aldrich) pendant 24 heures. Les cellules sont alors marquées 20 minutes avec 50 µl d'une solution de SYTO62 (Invitrogen) à 10 µM préparée dans le tampon A.

Les échantillons sont placés sous un microscope à fluorescence (Leica DMIRB) à un grossissement ×100 puis soumis à une illumination continue à 488 nm avec une lampe à mercure (HBO 103W/2) pendant 50 secondes. L'intensité de fluorescence émise par le biocapteur est alors mesurée toutes les secondes. Les résultats sont présentés à la figure 2.

Des cellules HeLa non traitées soumises à une illumination continue présentent une augmentation cinétique de la fluorescence mesurée. Le traitement des cellules avec 0,1 µM et 1 µM d'agent anticancéreux Taxol (Placlitaxel), induit une baisse dose-dépendante de la variation de fluorescence mesurée sous illumination.

### Exemple 3 : Procédé selon l'invention mis en oeuvre sur des cellules eucaryotes avec différentes quantités d'un agent apoptogène en présence de différents composés fluorescents (SYTO13 et SYTO15).

Des cellules HeLa (Sigma-Aldrich) sont ensemencées dans une microplaque noire à fond transparent format 96 puits à 20000 cellules par puits la veille de l'expérience. Le jour du test les cellules sont traitées ou non avec 1 µM de staurosporine pendant 7 heures. Les cellules sont alors marquées 20 minutes avec 50 µl d'une solution de SYTO13 (Invitrogen) ou de SYTO15 (Invitrogen) à 10 µM préparée dans le tampon A.

Les cellules marquées sont placées sous un lecteur de fluorescence de type Varioskan (Thermo Electron Corporation) équipé d'une lampe Xenon Flash. Les échantillons marqués au SYTO13 et au SYTO15 sont alors soumis pendant 300 secondes à une illumination continue à 488 nm et 516 nm respectivement. Les intensités de fluorescence émises par les biocapteurs sont alors mesurées toutes les 5 secondes. Les résultats sont présentés à la figure 3.

Sur des cellules HeLa non traitées et marquées avec 10 µM de SYTO13 ou de SYTO15, on mesure, comme pour le SYTO62, une augmentation de la fluorescence sous illumination continue. Lorsque les cellules sont traitées avec 1 µM de staurosporine l'illumination continue n'induit pas d'augmentation de la fluorescence mesurée.

### Exemple 4 : Procédé selon l'invention mis en oeuvre sur des cellules procaryotes en présence de différentes quantités d'un composé fluorescent (SYTO62).

Des bactéries issues d'eaux usées sont ensemencées dans un tube la veille de l'expérience. Le jour du test 1 ml de suspension bactérienne sont centrifugés et les culots bactériens repris dans 100 µl de solutions de SYTO62 (Invitrogen) à 6,25 ; 12,5 ; 25 et 50 µM préparées dans le tampon A. Les bactéries sont incubées 30 minutes à température ambiante. Les bactéries marquées sont placées sous un microscope à fluorescence (Leica DMIRB) à un grossissement ×100 puis soumis à une illumination continue à 488 nm avec une lampe à mercure (HBO 103W/2) pendant 40 secondes. L'intensité de fluorescence émise par le biocapteur est alors mesurée toutes les secondes. Les résultats sont présentés à la figure 4.

Le marquage de bactéries avec une concentration de 6,25 µM de SYTO62, induit sous illumination continue une baisse de la fluorescence mesurée au cours du temps. Lorsque les bactéries sont traitées avec 12,5 µM de marqueur, le signal fluorescent mesuré est stable puis diminue à partir de 10 secondes d'illumination. A 25 µM puis 50 µM de SYTO62, on observe une augmentation de la fluorescence mesurée dont l'amplitude varie de façon dose-dépendante.

À des concentrations trop faibles de SYTO62, la distance entre molécules de marqueur est trop élevée rendant impossible l'installation d'un mécanisme d'inhibition. L'augmentation de la concentration de SYTO62 utilisée permet de diminuer cette distance et de permettre la mise en place du mécanisme d'homoFRET. Ceci se caractérise ainsi par l'apparition progressive d'une augmentation du signal mesuré sous illumination.

### Exemple 5 : Procédé selon l'invention mis en oeuvre sur des cellules eucaryotes en présence de différentes quantités d'acide okadaïque.

Des cellules HepG2 (ATCC) sont ensemencées dans une microplaque noire à fond transparent format 96 puits à 20000 cellules par puits l'avant-veille de l'expérience. La veille du test les cellules sont traitées ou non avec 75 µl de solutions d'acide okadaïque (Sigma-Aldrich) à 0,01 ; 0,031 ; 0,1 ; 0,31 et 1 µM. Les cellules sont incubées pendant 24 heures.

Le jour du test, les cellules sont marquées 30 minutes à 37°C avec 25 µl d'une solution de SYTO13 (Invitrogen) à 8 µM (soit 2 µM final) préparée dans du milieu de culture MEM (Invitrogen).

Les échantillons sont placés sous un microscope à fluorescence à un grossissement ×100 puis soumis à une illumination continue à 488 nm avec une lampe à mercure pendant 20 secondes. L'intensité de fluorescence émise par le biocapteur est alors mesurée toutes les 0,4 secondes. Les résultats sont présentés à la figure 5.

Les cellules HepG2 non traitées soumises à une illumination continue présentent une augmentation cinétique de la fluorescence mesurée. Le traitement des cellules avec différentes quantités d'acide okadaïque induit une baisse dose-dépendante de la variation de fluorescence mesurée sous illumination.

## Revendications

1. Procédé pour déterminer l'influence d'une condition sur un échantillon biologique comprenant les étapes consistant à :
a) soumettre ledit échantillon biologique à ladite condition ;
b) mettre un composé fluorescent en contact avec ledit échantillon, l'ordre des étapes (a) et (b) étant quelconque ;
c) exciter ledit composé fluorescent à la longueur d'onde d'excitation adéquate pendant une durée t dont le point de départ est *t0* ;
d) établir le profil cinétique de la fluorescence émise par ledit composé fluorescent fixé audit échantillon durant la durée t d'excitation, la fluorescence mesurée à *t0* servant de valeur de référence,
ledit procédé mettant en oeuvre un seul type de composé fluorescent.

2. Procédé pour déterminer l'influence d'une condition sur un échantillon biologique **caractérisé en ce qu'**il comprend les étapes consistant à :
a') diviser ledit échantillon biologique en une première partie A et une seconde partie B ;
b') soumettre ladite partie A à ladite condition ;
c') mettre un composé fluorescent en contact avec les parties A et B dudit échantillon biologique, l'ordre des étapes (b') et (c') étant quelconque ;
d') exciter ledit composé fluorescent à la longueur d'onde d'excitation adéquate pendant une durée *t* dont le point de départ est t*0*,
e') mesurer, pour chaque partie d'échantillon, la fluorescence émise par ledit composé fluorescent fixé à ladite partie d'échantillon à un temps T inclus dans la durée *t* d'excitation, la fluorescence mesurée à *t0* pour la partie A et la partie B servant de valeur de référence respectivement pour la partie A et la partie B,
f') comparer les valeurs obtenues à l'étape (e') pour la partie A et la partie B dudit échantillon biologique,
ledit procédé mettant en oeuvre un seul type de composé fluorescent.

3. Procédé selon revendication 1 ou 2, **caractérisé en ce que** ledit échantillon biologique est choisi dans le groupe constitué par une cellule, plusieurs cellules, une partie de cellule, une préparation cellulaire et leurs mélanges.

4. Procédé selon l'une quelconque des revendications 1 à 3, **caractérisé en ce que** ladite condition est choisie parmi les conditions physiques et les conditions chimiques.

5. Procédé selon l'une quelconque des revendications précédentes, **caractérisé en ce que** ledit composé fluorescent est fixé audit échantillon biologique de façon directe.

6. Procédé selon l'une quelconque des revendications 1 à 4, **caractérisé en ce que** ledit composé fluorescent est fixé audit échantillon biologique de façon indirecte au moyen d'un agent de fixation.

7. Procédé selon la revendication 6, **caractérisé en ce que** ledit agent de fixation est choisi dans le groupe constitué par un peptide, une protéine, un anticorps, un agoniste ou antagoniste de récepteurs membranaires ou nucléaires, une hormone, un acide nucléique.

8. Procédé selon l'une quelconque des revendications précédentes, **caractérisé en ce que** ledit composé fluorescent est un composé fluorescent spécifique des acides nucléiques.

9. Procédé selon l'une quelconque des revendications précédentes, **caractérisé en ce que** ledit composé fluorescent est choisi parmi les intercalants fluorescents, les colorants liant les bases A:T ou les bases G:C et les cyanines perméantes ou imperméantes.

10. Procédé selon l'une quelconque des revendications précédentes, **caractérisé en ce que** la durée d'excitation *t* est comprise entre 1 et 1000 secondes.

11. Procédé pour identifier un composé capable de moduler un processus biologique comprenant une étape de mise en oeuvre d'un procédé tel que défini aux revendications précédentes, ledit composé à tester étant la condition à laquelle l'échantillon biologique est soumis.

12. Procédé selon la revendication 11, **caractérisé en ce que** ledit processus physiologique est choisi parmi l'apoptose, la nécrose, le réarrangement protéique membranaire et la division cellulaire.

13. Procédé pour détecter la présence d'un composé capable de moduler un processus biologique dans un échantillon E comprenant une étape de mise en oeuvre d'un procédé tel que défini à l'une quelconque des revendications 1 à 10, ledit échantillon E étant la condition à laquelle l'échantillon biologique est soumis.

14. Procédé selon la revendication 13, **caractérisé en ce que** ledit composé capable de moduler un processus biologique est une toxine marine ou un mélange de toxines marines.

15. Procédé selon l'une quelconque des revendications 13 ou 14, **caractérisé en ce que** ledit échantillon E est un extrait de mollusques.

## Patentansprüche

1. Verfahren zum Ermitteln des Einflusses einer Bedingung auf eine biologische Probe, umfassend die nachstehenden Schritte:
a) Aussetzen der biologischen Probe der genannten Bedingung;
b) Inkontaktbringen einer fluoreszierenden Verbindung mit der Probe, wobei die Reihenfolge der Schritte (a) und (b) beliebig ist;
c) Anregen der fluoreszierenden Verbindung mit der adäquaten Anregungswellenlänge für eine Zeitdauer *t,* deren Anfangspunkt *t0* ist;
d) Erstellen des kinetischen Profils der Fluoreszenz, die von der an die Probe fixierten fluoreszierenden Verbindung für die Anregungsdauer *t* emittiert wird, wobei die bei *t0* gemessene Fluoreszenz als Referenzwert dient,
wobei bei dem Verfahren eine einzige Art von fluoreszierender Verbindung verwendet wird.

2. Verfahren zum Ermitteln des Einflusses einer Bedingung auf eine biologische Probe, **dadurch gekennzeichnet, dass** es die nachstehenden Schritte umfasst:
a') Aufteilen der biologischen Probe in einen ersten Teil A und einen zweiten Teil B;
b') Aussetzen von Teil A der genannten Bedingung;
c') Inkontaktbringen einer fluoreszierenden Verbindung mit den Teilen A und B der biologischen Probe, wobei die Reihenfolge der Schritte (b') und (c') beliebig ist;
d') Anregen der fluoreszierenden Verbindung mit der adäquaten Anregungswellenlänge für eine Zeitdauer *t,* deren Anfangspunkt *t0* ist;
e') für jeden Probenteil Messen der Fluoreszenz, die von der an den Probenteil fixierten fluoreszierenden Verbindung zu einer Zeit *T* emittiert wird, die in der Anregungsdauer *t* enthalten ist, wobei die bei *t0* für den Teil A und den Teil B gemessene Fluoreszenz als Referenzwert für den Teil A bzw. den Teil B dient,
f') Vergleichen der in Schritt (e') erhaltenen Werte für Teil A und Teil B der biologischen Probe,
wobei bei dem Verfahren eine einzige Art von fluoreszierender Verbindung verwendet wird.

3. Verfahren nach Anspruch 1 oder 2, **dadurch gekennzeichnet, dass** die biologische Probe ausgewählt ist aus der Gruppe bestehend aus einer Zelle, mehreren Zellen, einem Zellenteil, eines Zellpräparats und deren Gemischen.

4. Verfahren nach einem der Ansprüche 1 bis 3, **dadurch gekennzeichnet, dass** die Bedingung ausgewählt ist aus physikalischen Bedingungen und chemischen Bedingungen.

5. Verfahren nach einem der vorangehenden Ansprüche, **dadurch gekennzeichnet, dass** die fluoreszierende Verbindung in direkter Weise an die biologische Probe fixiert ist.

6. Verfahren nach einem der Ansprüche 1 bis 4, **dadurch gekennzeichnet, dass** die fluoreszierende Verbindung in indirekter Weise mittels eines Fixiermittels an die biologische Probe fixiert ist.

7. Verfahren nach Anspruch 6, **dadurch gekennzeichnet, dass** das Fixiermittel ausgewählt ist aus der Gruppe umfassend ein Peptid, ein Protein, einen Antikörper, einen Agonisten oder Antagonisten von Membran- oder Kernrezeptoren, einem Hormon, einer Nukleinsäure.

8. Verfahren nach einem der vorangehenden Ansprüche, **dadurch gekennzeichnet, dass** die fluoreszierende Verbindung eine spezifische fluoreszierende Verbindung von Nukleinsäuren ist.

9. Verfahren nach einem der vorangehenden Ansprüche, **dadurch gekennzeichnet, dass** die fluoreszierende Verbindung ausgewählt ist aus fluoreszierenden Interkalationsmitteln, die Basen A:T oder die Basen G:C verbindenden Farbstoffen und permeanten oder impermeanten Cyaninen.

10. Verfahren nach einem der vorangehenden Ansprüche, **dadurch gekennzeichnet, dass** die Anregungsdauer *t* zwischen 1 und 1000 Sekunden beträgt.

11. Verfahren zum Identifizieren einer Verbindung, die in der Lage ist, einen biologischen Prozess zu modulieren, umfassend einen Schritt des Durchführens eines Verfahrens nach den vorangehenden Ansprüchen, wobei die zu testende Verbindung die Bedingung ist, welcher die biologische Probe ausgesetzt wird.

12. Verfahren nach Anspruch 11, **dadurch gekennzeichnet, dass** der physiologische Prozess ausgewählt ist aus Apoptose, Nekrose, Membranproteinumlagerung und Zellteilung.

13. Verfahren zum Erfassen des Vorhandenseins einer Verbindung, die in der Lage ist, einen biologischen Prozess in einer Probe E zu modulieren, umfassend einen Schritt des Durchführens eines Verfahrens nach einem der Ansprüche 1 bis 10, wobei die Probe E die Bedingung ist, welcher die biologische Probe ausgesetzt wird.

14. Verfahren nach Anspruch 13, **dadurch gekennzeichnet, dass** die Verbindung, die in der Lage ist, einen biologischen Prozess zu modulieren, ein Meerestoxin oder ein Gemisch von Meerestoxinen ist.

15. Verfahren nach einem der Ansprüche 13 oder 14, **dadurch gekennzeichnet, dass** die Probe E ein Extrakt aus Weichtieren ist.

## Claims

1. Process for determining the influence of a condition on a biological sample, comprising the steps consisting in:
a) subjecting said biological sample to said condition;
b) placing a fluorescent compound in contact with said sample, the steps (a) and (b) being in any order;
c) exciting said fluorescent compound at the appropriate excitation wavelength for a period *t* the starting point whereof is *t0*;
d) establishing the kinetic profile of the fluorescence emitted by said fluorescent compound bound to said sample during the excitation period *t*, the fluorescence measured at *t0* serving as the reference value;
e) possibly, comparing the kinetic profile obtained in step (d) with a reference kinetic profile, said process implementing a single type of fluorescent compound.

2. Process for determining the influence of a condition on a biological sample, wherein it comprises the steps consisting in:
a') dividing said biological sample into a first portion A and a second portion B;
b') subjecting said portion A to the condition;
c') placing a fluorescent compound in contact with the portions A and B of the biological sample, the steps (b') and (c') being in any order;
d') exciting said fluorescent compound at the appropriate excitation wavelength for a period *t* the starting point whereof is *t0*,
e') measuring, for each portion of sample, the fluorescence emitted by said fluorescent compound bound to said portion of sample at a time T lying within the excitation period *t*, the fluorescence measured at *t0* for the portion A and the portion B serving as the reference value respectively for the portion A and the portion B,
f') comparing the values obtained in step (e') for the portion A and the portion B of said biological sample,
said process implementing a single type of fluorescent compound.

3. Process according to claim 1 or 2, wherein said biological sample is selected from the group consisting of a cell, several cells, a part of a cell, a cell preparation and mixtures thereof.

4. Process according to any one of claims 1 to 3, wherein said condition is selected from physical conditions and chemical conditions.

5. Process according to any one of the previous claims, wherein said fluorescent compound is fixed onto said biological sample directly.

6. Process according to any one of claims 1 to 4, wherein said fluorescent compound is fixed onto said biological sample indirectly by means of a binding agent.

7. Process according to claim 6, wherein said binding agent is selected from the group consisting of a peptide, a protein, an antibody, an agonist or antagonist of membrane or nuclear receptors, a hormone or a nucleic acid.

8. Process according to any one of the previous claims, wherein said fluorescent compound is a fluorescent compound specific to nucleic acids.

9. Process according to any one of the previous claims, wherein said fluorescent compound is selected from the fluorescent intercalating agents, dyes binding to the bases A:T or the bases G:C and the permeant or impermeant cyanines.

10. Process according to any one of the previous claims, wherein the excitation period *t* lies between 1 and 1000 seconds.

11. Process for identifying a compound capable of modulating a biological process comprising a step of implementing a process as defined in any one of previous claims, said test compound being the condition to which the biological sample is subjected.

12. Process according to claim 11, wherein said physiological process is selected from apoptosis, necrosis, membrane protein rearrangement and cell division.

13. Process for detecting the presence of a compound capable of modulating a biological process in a sample E comprising a step of implementing a process as defined in any one of claims 1 to 10, said sample E being the condition to which the biological sample is subjected.

14. Process according to claim 13, wherein said compound capable of modulating a biological process is a marine toxin or a mixture of marine toxins.

15. Process according to any one of claims 13 or 14, wherein said sample E is an extract from molluscs.
